# EUROPEAN PATENT SPECIFICATION

(11) **EP 4 212 410 B1**
(45) Date of publication and mention of the grant of the patent: **12.03.2025**
(21) Application number: 21866000.9
(22) Date of filing: 08.09.2021
(51) Int. Cl.: B62D 15/02, B62D 7/04, B62D 11/04, B66F 9/06, B66F 9/075

(54) **STEERABLE DRIVE MECHANISM AND TRANSPORTER**
LENKBARER ANTRIEBSMECHANISMUS UND TRANSPORTER
MÉCANISME D'ENTRAÎNEMENT ORIENTABLE ET TRANSPORTEUR

(30) Priority: 08.09.2020 CN 202021946030 U
(43) Date of publication of application: 19.07.2023
(73) Proprietor: Hangzhou Hikrobot Co., Ltd., Hangzhou, Zhejiang 310051 (CN)
(72) Inventor: YU, Wentao, Hangzhou, Zhejiang 310051 (CN); ZHAO, Luhao, hangzhou, Zhejiang 310051 (CN)
(74) Representative: Goddar, Heinz J.
(86) International application number: PCT/CN2021/117153
(87) International publication number: WO 2022/052947

(56) References cited:
- CN-A- 109 435 823
- CN-A- 109 606 505
- CN-A- 110 054 115
- CN-A- 110 341 831
- CN-U- 209 395 867
- CN-U- 213 057 206
- DE-A1- 102010 002 744
- KR-B1- 102 113 636
- US-A- 4 993 507
- US-A1- 2019 270 375

## Description

### TECHNICAL FIELD

The present application relates to the field of transport vehicle technologies, and in particular, to a steerable drive mechanism and a transport vehicle.

### BACKGROUND

Currently, a steerable drive mechanism generally uses an encoder as a detection functional component to obtain steering information of the steerable drive mechanism, the encoder converts the steering information into an electrical signal, and inputs the electrical signal to a controller of a transport vehicle. The controller then issues a correction instruction to a motor based on specific operating conditions to achieve closed-loop control of the steerable drive mechanism.

DE102010002744A1 discloses an arrangement for determining absolute steering angles in a steerable drive device of industrial truck. The arrangement has a distance sensor for determining steering angles. Distance between the distance sensor and a cam track for determination of the steering angles is determined independence of the steering angles. The distance sensor is fixed at a frame plate of a vehicle frame. The distance to the distance sensor is changed along the cam track related to a steering axle in an axial direction or in a radial direction. A position sensor is assigned to another cam track.

### SUMMARY

The invention is defined by a steerable drive mechanism and a transport vehicle according to the independent claims. Preferred embodiments are defined in the dependent claims.

In one aspect, a steerable drive mechanism is provided in the present closure. The steerable drive mechanism includes an outer bracket, an inner bracket, one or more traveling wheels, and a detection assembly, the inner bracket being rotatably disposed in the outer bracket.

The detection assembly includes a positioning element and a distance measuring element; in the positioning element and the distance measuring element, one is disposed on a peripheral outer wall of the inner bracket, and other is disposed on the outer bracket; the distance measuring element obtains relative movement information between the distance measuring element and the positioning element, to detect angular information of rotation of the inner bracket relative to the outer bracket.

In another aspect, a transport vehicle is provided in the present disclosure. The transport vehicle includes the above steerable drive mechanism.

The technical solutions adopted in the present disclosure can achieve the following beneficial effects:

In the steerable drive mechanism disclosed in the present disclosure, the detection assembly includes a positioning element and a distance measuring element. Based on the cooperative use of the positioning element and the distance measuring element, the angular information of the rotation of the inner bracket relative to the outer bracket can be detected, and in turn, the rotation information of the traveling wheel can be obtained; meanwhile, in the positioning element and the distance measuring element, one is disposed on the peripheral outer wall of the inner bracket, and the other is disposed on the outer bracket. In this case, it is undoubtedly possible to avoid the detection assembly occupying excessive space in a height direction of the steerable drive mechanism, and achieve the object of reducing the whole size of the steerable drive mechanism.

Compared to the related art in which the encoder is stacked with the drive motor in the height direction of the steerable drive mechanism, the steerable drive mechanism disclosed in the present disclosure is based on the coordination of the positioning element and the distance measuring element, and can provide sufficient installation space for the drive assembly without increasing the whole size of the steerable drive mechanism, so that high-power type of drive assemblies may be selected, thereby improving the whole dynamic load capacity of the transport vehicle.

### BRIEF DESCRIPTION OF THE DRAWINGS

The drawings described herein are used to provide a further understanding of the present disclosure and constitute a part of the present disclosure. The schematic embodiments of the present disclosure and the description thereof are used to explain the present disclosure, and do not constitute an improper limitation on the present disclosure. In the accompanying drawings:
FIG. 1 is a schematic diagram showing a breakdown structure of a steerable drive mechanism disclosed in the embodiments of the present disclosure;
FIG. 2 is a schematic diagram showing a breakdown structure of another steerable drive mechanism disclosed in the embodiments of the present disclosure.

### DETAILED DESCRIPTION OF THE EMBODIMENTS

The technical solutions of the present disclosure will be clearly and completely described below in conjunction with the specific embodiments of the present disclosure and the accompanying drawings in order to make the purpose, technical solutions and advantages of the present disclosure clearer. However, the described implementations are only a part, but not all, of the implementations of the present disclosure.

Steerable drive mechanisms have both driving and steering control functions. They may be divided into differential drive mechanisms and helm drive mechanisms/steering wheel drive mechanisms. Steerable drive mechanisms may be used to drive mechanical structures such as transport vehicles to achieve forward and backward straight movement or steering movement.

Two wheels of the differential drive mechanism are installed on a same axis, and speeds of the two wheels are controlled by two motion motors respectively, and the differential drive mechanism travels in a preset direction. In a case where the two wheels rotate at a same speed and in a same direction, the differential drive mechanism may travel in a straight line. In a case where the two wheels rotate at the same speed and in opposite directions, the differential drive mechanism rotates on the spot. In a case where the two wheels rotate at a differential speed, the differential drive mechanism may turn in an arc.

The helm drive mechanism has both driving and steering control functions, which are independently controlled by two motors. A drive motor provides driving force for the wheels, a steering motor controls rotation of the wheels, and the helm drive mechanism may travel and turn simultaneously. In addition to in-place turning and arc turning, the helm drive mechanism may also achieve left and right translation, and oblique translation. Common types of helm drive mechanisms include single helm drive and dual helm drive.

In the related arts, an encoder has a certain volume, and is generally stacked with the drive motor, thereby causing the whole size of the steerable drive mechanism in a height direction to be too large; in a case where the whole size of the steerable drive mechanism is ensured to be constant, installation space of the drive motor will be compressed, thus it is forced to only adopt a low-power type drive motor, thereby limiting the whole power load capacity of the transport vehicle.

In a case where the encoder is a hollow encoder, the interior of the hollow encoder is hollow, and its hollow space is also used to accommodate other structures, such as a cable for the drive motor, thus the above problem is even more serious.

The technical solutions disclosed by the embodiments of the present disclosure will be described in detail below with reference to the accompanying drawings.

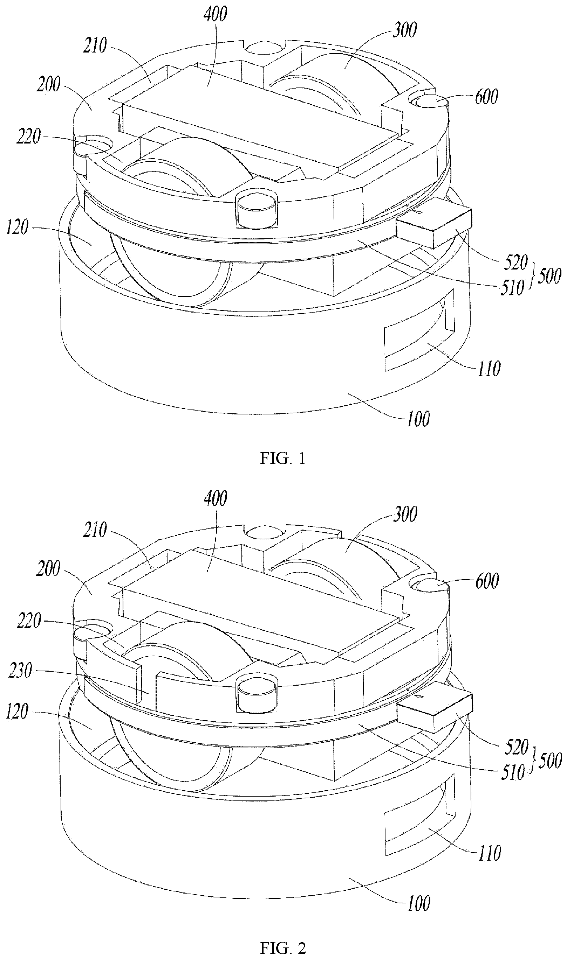

Referring to FIG. 1, the embodiments of the present disclosure discloses a steerable drive mechanism, which includes an outer bracket 100, an inner bracket 200, a traveling wheel 300, and a detection assembly 500. In some embodiments, the types of steerable drive mechanisms are not limited, for example, they may be steerable drive mechanisms for transport vehicles or mobile robots. The following content takes a steerable drive mechanism on board a transport vehicle as an example.

The outer bracket 100 and the inner bracket 200 both are basic components of a steerable drive mechanism, and can play a supporting role as a foundation for mounting and support.

The steerable drive mechanism generally further includes a drive assembly 400, which is a power component of the steerable drive mechanism. The traveling wheel 300 may be used in conjunction with the drive assembly 400, and the drive assembly 400 is connected to the traveling wheel 300, and the traveling wheel 300 is driven by the drive assembly 400, so that the traveling wheel 300 is driven to move on a support surface. For example, the drive assembly 400 can drive the traveling wheel 300 to rotate, thereby enabling the traveling wheel 300 to move on the support surface. The drive assembly 400 can also drive the traveling wheel 300 to turn. The above operating principle is common knowledge in the art, and will not be described herein. In some embodiments, there are various types of support surfaces, such as floors, worktops, or logistics tracks.

The detection assembly 500 is a functional component of a steerable drive mechanism that can detect angular information of the rotation of the inner bracket 200 relative to the outer bracket 100, thereby obtaining the steering information of the traveling wheel. It will be understood that when the steerable drive mechanism performs a steering action, it needs to obtain the steering information of the traveling wheel 300 through the detection assembly 500, convert the steering information into an electrical signal, and transmit it to a controller of the transport vehicle. The controller then issues a correction instruction to the drive assembly 400 according to the specific operating condition, to adjust the steering angle of the traveling wheel 300, and through the above operating process, the closed-loop control of the transport vehicle over the traveling wheel is completed.

In some embodiments, the drive assembly 400 may generally be provided in the inner bracket 200 to optimize the structural layout. In combination with the foregoing, the drive assembly 400 is connected with the traveling wheel 300 and drives the traveling wheel 300. When the traveling wheel 300 turns, the traveling wheel 300 will bring the inner bracket 200 to rotate. Meanwhile, the inner bracket 200 is rotatably arranged in the outer bracket 100, which means that the inner bracket 200 may have relative rotation relative to the outer bracket 100. Therefore, when the inner bracket 200 rotates, there will be no interference between the inner bracket 200 and the outer bracket 100.

In some embodiments, the inner bracket 200 may be rotationally fitted with the inner wall of the outer bracket 100 through the outer circumference of the inner bracket 200. In some embodiments, the rotatable relationship between the two may be achieved through a clearance sliding fit. The inner bracket 200 may also be connected with the outer bracket 100 through other rotational fit relationships. The power source for the rotation of the inner bracket 200 relative to the outer bracket 100 is the indirect drive of the drive assembly 400.

In some embodiments, the detection assembly 500 includes a positioning element 510 and a distance measuring element 520. In the positioning element 510 and the distance measuring element 520, one is disposed on a peripheral outer wall of the inner bracket 200, and the other is disposed on the outer bracket 100. That is, the positioning element 510 may be disposed on the peripheral outer wall of the inner bracket 200, and the distance measuring element 520 may be correspondingly disposed on the outer bracket 100, or the distance measuring element 520 may be disposed on the peripheral outer wall of the inner bracket 200, and the positioning element 510 is correspondingly disposed on the outer bracket 100. The embodiments do not limit the setting positions of the positioning element 510 and the distance measuring element 520.

The distance measuring element 520 may obtain information about its relative movement with the positioning element 510, to detect the angular information about the rotation of the inner bracket 200 relative to the outer bracket 100. Since there is a relative rotation between the inner bracket 200 and the outer bracket 100, during this process, there is also a relative rotation between the positioning element 510 and the distance measuring element 520. The movement information of the positioning element 510 relative to the distance measuring element 520 may be processed by the controller inside the transport vehicle, to obtain the steering information of the traveling wheel 300. The controller can then issue an instruction to control the traveling wheel 300 to turn to the desired direction/position, and completes accurate steering action.

As can be seen from the above description, in the steerable drive mechanism disclosed in the embodiments of the present disclosure, the detection assembly 500 includes a positioning element 510 and a distance measuring element 520. Based on the cooperative use of the positioning element 510 and the distance measuring element 520, the angular information of the rotation of the inner bracket relative to the outer bracket can be detected, thereby obtaining the steering information of the traveling wheel 300; meanwhile, in the positioning element 510 and the distance measuring element 520, one is disposed on the peripheral outer wall of the inner bracket 200, and the other is disposed on the outer bracket 100. In this case, it can be avoided that the detection assembly 500 occupies excessive space in the height direction of the steerable drive mechanism, and the object of reducing the whole size of the steerable drive mechanism can be achieved.

Compared to related arts in which the encoder is stacked with the drive motor in the height direction of the steerable drive mechanism, the steerable drive mechanism disclosed in the embodiments of the present disclosure is based on the cooperative arrangement of the positioning element 510 and the distance measuring element 520, thereby providing sufficient installation space for the drive assembly 400 without increasing the whole size of the steerable drive mechanism, so that a high-power type drive assembly 400 may be adopted, and the whole dynamic load capacity of the transport vehicle is improved.

In some embodiments, there are various types of detection assemblies 500. For example, the positioning element 510 is a magnet, and the distance measuring element 520 is a Hall device. When the inner bracket 200 rotates relative to the outer bracket 100, relative movement occurs between the magnet and the Hall device. The Hall device may obtain the movement information of the magnet by detecting the intensity change of the magnetic field generated by the magnet, and the controller inside the transport vehicle calculates the steering information of the traveling wheel 300 based on the movement information.

In some embodiments, the detection assembly 500 may be a magnetic grid ruler, the positioning element 510 may be a scale magnetic grid, and the distance measuring element 520 may be a magnetic grid reader. It will be understood that the magnetic grid reader and the scale magnetic grid are generally induced to each other in a non-contact manner. Magnetic poles on the scale magnetic grid generate magnetic fields with different directions. The magnetic grid reader senses changes in the magnetic field during moving along the scale magnetic grid, converts the magnetic field change into an analog signal or a digital signal, and outputs the analog signal or the digital signal, that is, the magnetization signal read on the scale magnetic grid is converted into an electrical signal and transmitted it to the detection assembly to achieve displacement measurement or position positioning.

The scale magnetic grid and the magnetic grid reader change relative positions with the inner bracket 200 and the outer bracket 100, respectively. The magnetic grid reader may move on the scale magnetic grid to obtain relative movement information between the two, and the controller inside the transport vehicle calculates the steering information of the traveling wheel 300 based on the movement information.

The detection assembly 500 may also be other detection structures, as long as the steering information of the traveling wheel 300 can be detected through reasonable arrangement of the structure, for example, the detection assembly 500 is a combination of a magnetic device and a Hall device.

In some embodiments, there is no limitation on the arrangement manner of the magnetic grid ruler. In an optional solution, the circumferential outer wall of the inner bracket 200 may be provided with an arc mounting surface, the scale magnetic grid is disposed along the arc mounting surface, and the magnetic grid reader is disposed on the outer bracket 100. In this way, due to the relative movement between the inner bracket and the outer bracket, the magnetic grid reader moves on the scale magnetic grid along the arc mounting surface, and its movement trajectory tends to perform a circular rotational motion based on the arc mounting surface, thereby obtaining more accurate steering information of the traveling wheel 300.

The scale magnetic grid may also be disposed on the outer bracket 100, and the magnetic grid reader is disposed on the peripheral outer wall of the inner bracket 200. In this case, the outer bracket 100 may be correspondingly provided with the arc mounting surface for installing the scale magnetic grid.

It will be understood that the scale magnetic grid has a certain length/size and a small thickness. Therefore, in the above embodiments, the scale magnetic grid may be installed using the circumferential outer wall of the inner bracket 200, and only occupies a small space of the circumferential side of the inner bracket 200, thereby avoiding occupying a large space in the height direction of the steerable drive mechanism, so that it is possible to provide greater installation space for the drive assembly 400 without increasing the whole size of the steerable drive mechanism, so as to facilitate the use of high-power type drive assemblies.

In some embodiments, the detection assembly 500 may be a grating ruler, the positioning element 510 may be a scale grating, and the distance measuring element 520 may be a grating reader. It will be noted that a grating ruler is a photoelectric detection element made by using the transmission and diffraction phenomena of light. An indicator grating is provided in the grating reader. When the relative position between the scale grating and the grating reader changes with the inner bracket 200 and the outer bracket 100, the indicator grating moves on the scale grating, thereby obtaining relative movement information between the two, and the controller inside the transport vehicle calculates the steering information of the traveling wheel 300 based on the movement information.

The arrangement manner of the magnetic grid ruler in the above embodiments may also be adopted for the grating ruler.

To optimize the structural layout of the steerable drive mechanism and optimize space utilization, in the optional scheme, the outer bracket 100 may be provided with a first installation space 110, which is opposite to the scale magnetic grid, and the magnetic grid reader is disposed in the first installation space 110.

Through the first installation space 110, the magnetic grid reader may be embedded in the outer bracket 100, thereby avoiding the magnetic grid reader being installed between the outer bracket 100 and the inner bracket 200, reducing a gap between the outer bracket 100 and the inner bracket 200, and improving the structural compactness and space utilization of the steerable drive mechanism; meanwhile, the first installation space 110 is opposite to the scale magnetic grid, and the magnetic grid reader disposed in the first installation space 110 may obtain displacement information from the scale magnetic grid, thereby ensuring the normal operation of the magnetic grid ruler.

In some embodiments, there are various types of the first installation space 110, such as installation slots, or installation through-holes.

The outer bracket 100 may have various structural forms, and the inner bracket 200 is rotationally matched with the outer bracket 100 through a rotating shaft. In some embodiments, the outer bracket 100 may have a first accommodation space 120 and an opening. The opening communicates with the first accommodation space 120. The inner bracket 200 and the traveling wheel 300 are both disposed in the first accommodation space 120, and the traveling wheel 300 is exposed out of the outer bracket 100 through the opening to move on the support surface.

It will be understood that in the above embodiments, since the inner bracket 200 and the traveling wheel 300 are both located in the first accommodation space 120, that is, the outer bracket 100 wraps around the inner bracket 200 and the traveling wheel 300, so that the outer bracket 100 can play a protective role for the inner bracket 200 and the traveling wheel 300, preventing damage to the inner bracket 200, the drive assembly 400 and the traveling wheel 300 that are provided in the inner bracket 200. The opening is generally disposed on a side of the outer bracket 100 facing the support surface, so that the traveling wheel 300 may extend outside of the outer bracket 100 through the opening and contact the support surface to move on the support surface. It will be understood that if foreign matters fall from the top of the outer bracket 100 into the inner bracket and/or the outer bracket, the foreign matters will affect the normal operation of the steerable drive mechanism. To avoid the above problem, a cover may be installed on the top of the outer bracket 100, and the cover may be fixed to the top of the outer bracket 100 by screws or welding. In addition, to prevent the inner bracket from completely detaching from the opening, the size of the opening is smaller than the inner bracket. For example, the inner wall of the outer bracket is provided with a position-limiting step.

The inner bracket 200 may be provided with rolling bodies 600 along the peripheral outer wall of the inner bracket 200, and the inner bracket 200 rotatably engages with the outer bracket 100 through the rolling bodies 600. It will be understood that the inner bracket 200, the outer bracket 100, and the rolling bodies 600 can form a rolling bearing structure, thereby improving the smoothness of rotation between the inner bracket 200 and the outer bracket 100, to achieve higher rotational efficiency.

The type of rolling bodies 600 is not limited. As shown in FIG. 1, the rolling bodies 600 may be selected as side rollers, however it may also be of other types, such as balls. The number of rolling bodies 600 is also not limited and may be one or more.

In addition, the top of the inner bracket is provided with two or more grooves, in which second rolling bodies are disposed, and the second rolling bodies partially protrudes out of the grooves, enabling the inner bracket to roll against the cover installed on the top of the outer bracket, further improving the rotational smoothness between the inner bracket 200 and the outer bracket 100, to achieve higher rotational efficiency. The type of the second rolling bodies is not limited and may be rollers, balls, or other suitable structures.

In some embodiments, when the traveling wheel 300 is in contact with the support surface, the inner bracket 200 abuts against the cover installed on the top of the outer bracket through second rolling bodies, and there is a gap between the lower surface of the side of the inner bracket 200 and the flange on the circumferential side of the opening in the outer bracket.

Generally, the inner bracket 200 is a circular rotating bracket. In this way, the rotation action of the inner bracket 200 is less likely to be interfered with by the outer bracket 100, and the center of gravity of the inner bracket 200 is constant, and does not causes eccentric problems, so that the rotation efficiency is the highest; meanwhile, because the inner bracket 200 makes circular rotation movement, from the perspective of the configuration of the rotating structure, the circular rotating bracket is more convenient to be installed in the outer bracket 100.

The embodiments do not limit the specific number of traveling wheels 300, and there may be one traveling wheel 300. In this case, to ensure that the traveling wheel 300 may achieve the steering function, the drive assembly 400 needs to include a steering motor that drives the traveling wheel 300 to achieve the steering action.

Alternatively, there may be two traveling wheels 300. In this case, the drive assembly 400 may include two drive modules, each of which is connected to a traveling wheel 300 and drives the traveling wheel 300. By driving the traveling wheels 300 through two drive modules respectively, differential speed control of the two traveling wheels 300 may be achieved. When the transport vehicle is used, the controller of the transport vehicle may control the two drive modules to indirectly control the rotational speeds of the two traveling wheels 300 to be different, that is, one traveling wheel 300 has a higher rotational speed and the other traveling wheel 300 has a lower rotational speed. In this case, the whole steerable drive mechanism will turn towards a side where the traveling wheel 300 with a lower rotational speed is disposed. For the helm drive mechanism, two drive modules may also be used to drive the traveling wheel 300 to operate and steer appropriately according to a preset angle, thereby cooperating to achieve the steering movement of the helm drive mechanism.

To further optimize the structural layout of the steerable drive mechanism and improve the structural compactness and space utilization of the steerable drive mechanism, in optional solutions, the inner bracket 200 may be provided with a second installation space 210, and the drive assembly 400 may be provided within the second installation space 210. The inner bracket 200 may also be provided with a second accommodation space 220, which is communicated with the second installation space 210, and the traveling wheel 300 is disposed in the second accommodation space 220.

It will be understood that based on the second installation space 210 and the second accommodation space 220, the drive assembly 400 and the traveling wheel 300 both can be embedded in the inner bracket 200, thereby avoiding the drive assembly 400 and the traveling wheel 300 disposing in the gap between the outer bracket 100 and the inner bracket 200, and reducing the gap between the outer bracket 100 and the inner bracket 200, that is, the outer bracket 100 and the inner bracket 200 may be disposed closer, Thus the structural compactness and space utilization of the steerable drive mechanism is further improved.

As shown in FIG. 1, in a case where there are two traveling wheels 300, the two drive modules may be integrated into a modular drive assembly 400, which is more convenient to be embedded in the second installation space 210. The two traveling wheels 300 may be respectively disposed on opposite sides of the drive assembly 400, so that the traveling wheels 300 are more evenly distributed to avoid interference between the two traveling wheels 300. However, in this case, the second accommodation space 220 needs to be two to accommodate the two traveling wheels 300.

It will be noted that the structure (including the first accommodation space 120, the opening, and the second accommodation space 220) for accommodating the traveling wheel 300 needs to be able to ensure that the traveling wheel 300 is not subject to interference during rotation, steering, and other actions.

Please refer to FIG. 2, which shows another steerable drive mechanism, in which the inner bracket 200 may be provided with a notch region 230 that may be used to accommodate smaller structures within the steerable drive mechanism, such as the power supply cable of the drive assembly 400. The number and location of the notch region 230 are not limited and may be determined based on the specific operating conditions inside the steerable drive mechanism.

Based on the above steerable drive mechanism, the embodiments of the present disclosure further disclose a transport vehicle, which includes the above steerable drive mechanism. The transport vehicle referred to in the embodiments of the present disclosure may be an automated guided vehicle (AGV), a rail guided vehicle (RGV), an intelligent guided vehicle (IGV), etc. The embodiments of the present disclosure do not limit the types of transport vehicles.

Generally, the outer bracket 100 of the steerable drive mechanism is the vehicle body frame of the transport vehicle. In this case, the inner bracket 200 is directly rotatably engaged with the vehicle body frame. In this way, because of the omission of the outer bracket 100 structure in the steerable drive mechanism, the whole volume of the steerable drive mechanism may be reduced, thereby improving the space utilization rate inside the transport vehicle. Alternatively, the outer bracket 100 of the steerable drive mechanism and the vehicle body frame of the transport vehicle may also be separate components. In this case, the steerable drive mechanism is an independent module, and based on modular design, it is possible to optimize the ease of disassembly and mounting of the steerable drive mechanism and is more conducive to troubleshooting.

In some embodiments, the transport vehicle may further include one or more casters to cooperate with the steerable drive mechanism to achieve various movements of the transport vehicle.

## Claims

1. A steerable drive mechanism, comprising an outer bracket (100), an inner bracket (200), one or more traveling wheels (300), and a detection assembly (500), the inner bracket (200) being rotatably disposed in the outer bracket (100); wherein
the detection assembly (500) comprises a positioning element (510) and a distance measuring element (520);
**characterized in that**, in the positioning element (510) and the distance measuring element (520), one is disposed on a peripheral outer wall of the inner bracket (200), and other is disposed on the outer bracket (100);
the distance measuring element (520) obtains relative movement information between the distance measuring element (520) and the positioning element (510), to detect angular information of rotation of the inner bracket (200) relative to the outer bracket (100).

2. The steerable drive mechanism according to claim 1, wherein the detection assembly (500) is a magnetic grid ruler, the positioning element (510) is a scale magnetic grid, and the distance measuring element (520) is a magnetic grid reader.

3. The steerable drive mechanism according to claim 2, wherein the peripheral outer wall of the inner bracket (200) is provided with an arc mounting surface, the scale magnetic grid is disposed along the arc mounting surface, and the magnetic grid reader is disposed on the outer bracket (100).

4. The steerable drive mechanism according to claim 3, wherein the outer bracket (100) is provided with first installation space (110), which is opposite to the scale magnetic grid, and the magnetic grid reader is disposed in the first installation space (110).

5. The steerable drive mechanism according to claim 1, wherein the detection assembly (500) is a grating ruler, the positioning element (510) is a scale grating, and the distance measuring element (520) is a grating reader.

6. The steerable drive mechanism according to any one of claims 1 to 5, wherein the outer bracket (100) has first accommodation space (120) and an opening; the opening communicates with the first accommodation space (120); the inner bracket (200) and the one or more traveling wheels (300) are disposed in the first accommodation space (120), and the one or more traveling wheels (300) are exposed out of the outer bracket (100) through the opening to move on a support surface.

7. The steerable drive mechanism according to any one of claims 1 to 6, wherein the inner bracket (200) is provided with one or more rolling bodies (600) along the peripheral outer wall of the inner bracket (200), and the inner bracket (200) rotatably engages the outer bracket (100) through the one or more rolling bodies (600).

8. The steerable drive mechanism according to any one of claims 1 to 7, wherein the inner bracket (200) is a circular rotating bracket.

9. The steerable drive mechanism according to any one of claims 1 to 8, further comprises a drive assembly (400), wherein the drive assembly (400) is connected to the one or more traveling wheels (300), and the one or more traveling wheels (300) are driven by the drive assembly (400).

10. The steerable drive mechanism according to claim 9, wherein there are two traveling wheels (300), and the drive assembly (400) comprises two drive modules, each of which is connected to and drives one of the two traveling wheels (300).

11. The steerable drive mechanism according to claim 9, wherein the drive assembly (400) comprises a steering motor.

12. The steerable drive mechanism according to claim 9, wherein the inner bracket (200) is provided with second installation space (210), and the drive assembly (400) is provided within the second installation space (210).

13. The steerable drive mechanism according to claim 12, wherein the inner bracket (200) is further provided with second accommodation space (220), which is communicated with the second installation space (210), and the one or more traveling wheels (300) are disposed in the second accommodation space (220).

14. The steerable drive mechanism according to any one of claims 1 to 13, wherein the inner bracket (200) is provided with one or more notch regions (230).

15. A transport vehicle, comprising the steerable drive mechanism according to any one of claims 1 to 14.

## Patentansprüche

1. Lenkbarer Antriebsmechanismus, umfassend eine äußere Halterung (100), eine innere Halterung (200), ein oder mehrere Laufräder (300) und eine Erfassungsanordnung (500), wobei die innere Halterung (200) drehbar in der äußeren Halterung (100) angeordnet ist; wobei
die Erfassungsanordnung (500) ein Positionierungselement (510) und ein Abstandsmesselement (520) umfasst,
**dadurch gekennzeichnet, dass** in dem Positionierungselement (510) und dem Abstandsmesselement (520) eines an einer äußeren Umfangswand der inneren Halterung (200) angeordnet ist und das andere an der äußeren Halterung (100) angeordnet ist;
das Abstandsmesselement (520) Relativbewegungsinformationen zwischen dem Abstandsmesselement (520) und dem Positionierungselement (510) erhält, um Winkelinformationen einer Drehung der inneren Halterung (200) relativ zu der äußeren Halterung (100) zu erfassen.

2. Lenkbarer Antriebsmechanismus nach Anspruch 1, wobei die Erfassungsanordnung (500) ein Magnetgitterlineal ist, das Positionierungselement (510) ein Maßstabsmagnetgitter ist und das Abstandsmesselement (520) ein Magnetgitterleser ist.

3. Lenkbarer Antriebsmechanismus nach Anspruch 2, wobei die äußere Umfangswand der inneren Halterung (200) mit einer Bogenmontagefläche versehen ist, das Maßstabsmagnetgitter entlang der Bogenmontagefläche angeordnet ist und der Magnetgitterleser an der äußeren Halterung (100) angeordnet ist.

4. Lenkbarer Antriebsmechanismus nach Anspruch 3, wobei die äußere Halterung (100) mit einem ersten Installationsraum (110) versehen ist, der dem Maßstabsmagnetgitter gegenüberliegt, und der Magnetgitterleser in dem ersten Installationsraum (110) angeordnet ist.

5. Lenkbarer Antriebsmechanismus nach Anspruch 1, wobei die Erfassungsanordnung (500) ein Gitterlineal ist, das Positionierungselement (510) ein Maßstabsgitter ist und das Abstandsmesselement (520) ein Gitterleser ist.

6. Lenkbarer Antriebsmechanismus nach einem der Ansprüche 1 bis 5, wobei die äußere Halterung (100) einen ersten Aufnahmeraum (120) und eine Öffnung aufweist; die Öffnung mit dem ersten Aufnahmeraum (120) in Verbindung steht; die innere Halterung (200) und das eine oder die mehreren Laufräder (300) in dem ersten Aufnahmeraum (120) angeordnet sind und das eine oder die mehreren Laufräder (300) durch die Öffnung aus der äußeren Halterung (100) freiliegen, um sich auf einer Stützfläche zu bewegen.

7. Lenkbarer Antriebsmechanismus nach einem der Ansprüche 1 bis 6, wobei die innere Halterung (200) mit einem oder mehreren Wälzkörpern (600) entlang der äußeren Umfangswand der inneren Halterung (200) versehen ist und die innere Halterung (200) durch den einen oder die mehreren Wälzkörper (600) drehbar in die äußere Halterung (100) eingreift.

8. Lenkbarer Antriebsmechanismus nach einem der Ansprüche 1 bis 7, wobei die innere Halterung (200) eine kreisförmige Drehhalterung ist.

9. Lenkbarer Antriebsmechanismus nach einem der Ansprüche 1 bis 8, ferner umfassend eine Antriebsanordnung (400), wobei die Antriebsanordnung (400) mit dem einen oder den mehreren Laufrädern (300) verbunden ist und das eine oder die mehreren Laufräder (300) durch die Antriebsanordnung (400) angetrieben werden.

10. Lenkbarer Antriebsmechanismus nach Anspruch 9, wobei zwei Laufräder (300) vorhanden sind und die Antriebsanordnung (400) zwei Antriebsmodule umfasst, von denen jedes mit einem der zwei Laufräder (300) verbunden ist und dieses antreibt.

11. Lenkbarer Antriebsmechanismus nach Anspruch 9, wobei die Antriebsanordnung (400) einen Lenkmotor umfasst.

12. Lenkbarer Antriebsmechanismus nach Anspruch 9, wobei die innere Halterung (200) mit einem zweiten Installationsraum (210) versehen ist und die Antriebsanordnung (400) innerhalb des zweiten Installationsraums (210) vorgesehen ist.

13. Lenkbarer Antriebsmechanismus nach Anspruch 12, wobei die innere Halterung (200) ferner mit einem zweiten Aufnahmeraum (220) versehen ist, der mit dem zweiten Installationsraum (210) in Verbindung steht, und das eine oder die mehreren Laufräder (300) in dem zweiten Aufnahmeraum (220) angeordnet sind.

14. Lenkbarer Antriebsmechanismus nach einem der Ansprüche 1 bis 13, wobei die innere Halterung (200) mit einem oder mehreren Kerbbereichen (230) versehen ist.

15. Transportfahrzeug, umfassend den lenkbaren Antriebsmechanismus nach einem der Ansprüche 1 bis 14.

## Revendications

1. Mécanisme d'entraînement orientable, comprenant un support externe (100), un support interne (200), une ou plusieurs roues mobiles (300), et un ensemble de détection (500), le support interne (200) étant disposé de manière rotative dans le support externe (100) ; dans lequel
l'ensemble de détection (500) comprend un élément de positionnement (510) et un élément de mesure de distance (520) ;
**caractérisé en ce que**, dans l'élément de positionnement (510) et l'élément de mesure de distance (520), l'un est disposé sur une paroi externe périphérique du support interne (200), et l'autre est disposé sur le support externe (100) ;
l'élément de mesure de distance (520) obtient des informations de mouvement relatif entre l'élément de mesure de distance (520) et l'élément de positionnement (510), pour détecter des informations angulaires de rotation du support interne (200) par rapport au support externe (100).

2. Mécanisme d'entraînement orientable selon la revendication 1, dans lequel l'ensemble de détection (500) est une règle de grille magnétique, l'élément de positionnement (510) est une grille magnétique graduée, et l'élément de mesure de distance (520) est un lecteur de grille magnétique.

3. Mécanisme d'entraînement orientable selon la revendication 2, dans lequel la paroi externe périphérique du support interne (200) est pourvue d'une surface de montage en arc, la grille magnétique graduée est disposée le long de la surface de montage en arc, et le lecteur de grille magnétique est disposé sur le support externe (100).

4. Mécanisme d'entraînement orientable selon la revendication 3, dans lequel le support externe (100) est pourvu d'un premier espace d'installation (110), qui est opposé à la grille magnétique graduée, et le lecteur de grille magnétique est disposé dans le premier espace d'installation (110).

5. Mécanisme d'entraînement orientable selon la revendication 1, dans lequel l'ensemble de détection (500) est une règle de grille, l'élément de positionnement (510) est une grille graduée, et l'élément de mesure de distance (520) est un lecteur de grille.

6. Mécanisme d'entraînement orientable selon l'une quelconque des revendications 1 à 5, dans lequel le support externe (100) a un premier espace de logement (120) et une ouverture ; l'ouverture communique avec le premier espace de logement (120) ; le support interne (200) et les une ou plusieurs roues mobiles (300) sont disposés dans le premier espace de logement (120), et les une ou plusieurs roues mobiles (300) sont exposées hors du support externe (100) à travers l'ouverture pour se déplacer sur une surface de soutien.

7. Mécanisme d'entraînement orientable selon l'une quelconque des revendications 1 à 6, dans lequel le support interne (200) est pourvu d'un ou plusieurs corps roulants (600) le long de la paroi externe périphérique du support interne (200), et le support interne (200) vient en prise de manière rotative avec le support externe (100) à travers les un ou plusieurs corps roulants (600).

8. Mécanisme d'entraînement orientable selon l'une quelconque des revendications 1 à 7, dans lequel le support interne (200) est un support rotatif circulaire.

9. Mécanisme d'entraînement orientable selon l'une quelconque des revendications 1 à 8, comprenant en outre un ensemble d'entraînement (400), dans lequel l'ensemble d'entraînement (400) est relié aux une ou plusieurs roues mobiles (300), et les une ou plusieurs roues mobiles (300) sont entraînées par l'ensemble d'entraînement (400).

10. Mécanisme d'entraînement orientable selon la revendication 9, dans lequel il y a deux roues mobiles (300), et l'ensemble d'entraînement (400) comprend deux modules d'entraînement, dont chacun est relié à et entraîne l'une des deux roues mobiles (300).

11. Mécanisme d'entraînement orientable selon la revendication 9, dans lequel l'ensemble d'entraînement (400) comprend un moteur de direction.

12. Mécanisme d'entraînement orientable selon la revendication 9, dans lequel le support interne (200) est pourvu d'un second espace d'installation (210), et l'ensemble d'entraînement (400) est prévu à l'intérieur du second espace d'installation (210).

13. Mécanisme d'entraînement orientable selon la revendication 12, dans lequel le support interne (200) est en outre pourvu d'un second espace de logement (220), qui communique avec le second espace d'installation (210), et les une ou plusieurs roues mobiles (300) sont disposées dans le second espace de logement (220).

14. Mécanisme d'entraînement orientable selon l'une quelconque des revendications 1 à 13, dans lequel le support interne (200) est pourvu d'une ou plusieurs régions à encoche (230).

15. Véhicule de transport, comprenant le mécanisme d'entraînement orientable selon l'une quelconque des revendications 1 à 14.
